# EUROPÄISCHE PATENTSCHRIFT

(11) **EP 2 747 171 B1**
(45) Veröffentlichungstag und Bekanntmachung des Hinweises auf die Patenterteilung: **11.07.2018**
(21) Anmeldenummer: 13190836.0
(22) Anmeldetag: 30.10.2013
(51) Int. Cl.: H01M 10/6553, H01M 10/647, H01M 10/613, H01M 10/42, H01M 2/30, H01M 2/20, H01M 2/12, H01M 2/10, H01M 10/6554

(54) **Elektrische Energiespeicherzelle und elektrisches Energiespeichermodul**
Electrical energy storage cell and electrical energy storage module
Cellule de stockage d'énergie électrique et module de stockage d'énergie électrique

(30) Priorität: 18.12.2012 DE 102012223589
(43) Veröffentlichungstag der Anmeldung: 25.06.2014
(73) Patentinhaber: ROBERT BOSCH GMBH, 70442 Stuttgart (DE)
(72) Erfinder: Kessler, Martin, 73527 Schwaebisch Gmuend (DE); Tiefenbach, Andy, 71665 Vaihingen-Horrheim (DE)

(56) Entgegenhaltungen:
- EP-A1- 2 375 474
- JP-A- 2003 242 956
- US-A1- 2011 195 286

## Beschreibung

Die Erfindung betrifft eine elektrische Energiespeicherzelle und ein elektrisches Energiespeichermodul. Die Erfindung betrifft ferner ein Verfahren zum Herstellen eines elektrischen Energiespeichermoduls.

### Stand der Technik

Üblicherweise wird elektrischen Energiespeicherzellen Gleichstrom entnommen bzw. Gleichstrom in diese eingespeist. Daher ist der bisher bekannte Aufbau von Energiespeicherzellen auf die Optimierung der ohmschen Innenwiderstände und der spezifischen Energie- bzw. Leistungsdichte der Energiespeicherzellen ausgelegt.

In vielen Anwendungen elektrischer Energiespeicherzellen werden Speicherzellen in serieller oder paralleler Anordnung miteinander zu Batteriemodulen verschaltet, um gewünschte Ausgangsparameter wie z.B. elektrische Gesamtspannung, elektrischer Spannungsbereich, Energieinhalt oder Leistungsdichte einzustellen. Werden aus derartigen Energiespeicherzellen Ströme mit steigendem Wechselanteil entnommen, steigt frequenzabhängig ein Einfluss von verteilter Induktivität der Energiespeicherzellen. Außerdem können bei Betriebsfrequenzen im kHz-Bereich durch den stromverdrängenden Skineffekt Verluste in stromtragenden Bereichen sowie Wirbelströme in elektrisch leitfähigen Flächen, beispielsweise im Gehäuse, auftreten.

DE 10 2010 035 114 A1 offenbart eine Batterieeinheit mit einer Vielzahl von Zelleneinheiten, welche jeweils Akkumulatorzellen aufweisen, die über Busschienen elektrisch gekoppelt sind.

Es besteht ein Bedarf an Energiespeichermodulen aus einer oder mehreren Energiespeicherzellen, welche hinsichtlich der Entnahme von Wechselströmen hoher Frequenz geringere Verluste aufweisen und somit den Wirkungsgrad des die Energiespeicherzellen einsetzenden Systems verbessern.

### Offenbarung der Erfindung

Die Erfindung schafft gemäß einem ersten Aspekt eine elektrische Energiespeicherzelle, aufweisend:
- ein Zellgehäuse (Ia); - eine Austrittseinrichtung (6); und- zwei Polanschlüsse (Ib,Ic) mit jeweils unterschiedliche Polaritäten, wobei wenigstens einer der Polanschlüsse (Ib,Ic) gegenüber dem Zellgehäuse (Ia) elektrisch isoliert ist, wobei in betriebsgemäßer Lage der Energiespeicherzelle (1) die Polanschlüsse (Ib,Ic) an einer Unterseite der Energiespeicherzelle (1) angeordnet sind und die Austrittseinrichtung (6) für Gase der Energiespeicherzelle (1) an einer Oberseite der Energiespeicherzelle (1) angeordnet ist,dadurch gekennzeichnet, dass jeder der Polanschlüsse (Ib,Ic) im Wesentlichen über eine Hälfte einer Fläche der Unterseite des Zellgehäuses (Ia) ausgebildet ist.

Gemäß einem zweiten Aspekt wird mit der vorliegenden Erfindung ein elektrisches Energiespeichermodul bereitgestellt, welches aufweist:
- wenigstens einen Speicherzellstapel (10), mit mehreren Energiespeicherzellen (1) nach einem der Ansprüche 1 oder 2, die in betriebsgemäßer Lage der Energiespeicherzellen (1) Polanschlüsse (Ib,Ic) an Unterseiten der Energiespeicherzelle (1) aufweisen, wobei die Energiespeicherzellen (1) in dem Speicherzellstapel (10) seriell derart angeordnet sind, dass jeweils ein erster Polanschluss (Ib) und ein zweiter Polanschluss (Ic) zweier benachbarter Energiespeicherzellen (1) miteinander galvanisch mittels flächig ausgebildeter Zellverbindungselemente (4) verbunden sind, wobei eine Fläche eines Zellverbindungselements (4) im Wesentlichen einer Fläche von zwei Polanschlüssen (Ib,Ic) entspricht, wobei ein zweiter Rückleiter (3) mit einem zweiten Polanschluss (Ic) einer an einem zweiten Ende des Speicherzellstapels (10) angeordneten Energiespeicherzelle (1) galvanisch verbunden und im Wesentlichen über die gesamte Fläche der Unterseite des Speicherzellstapels (10) ausgebildet ist, wobei ein erster Rückleiter (2) mit einem ersten Polanschluss (Ib) einer an einem ersten Ende des Speicherzellstapels (10) angeordneten Energiespeicherzelle (1) galvanisch verbunden ist.

Gemäß einem dritten Aspekt wird mit der vorliegenden -Erfindung ein Verfahren geschaffen, welches folgende Schritte aufweist:
- Alternierendes Anordnen von Energiespeicherzellen (1) nach einem der Ansprüche 1 oder 2, mit einem Zellgehäuse (Ia) und jeweils zwei nach unten aus den Energiespeicherzellen (1) herausgeführten Polanschlüssen (Ib,Ic) zu einem Speicherzellstapel (10), wobei die Energiespeicherzellen (1) in betriebsgemäßer Lage um jeweils 180 Grad gegeneinander versetzt angeordnet werden;- Verbinden von ersten mit zweiten Polanschlüssen (Ib,Ic) unterschiedlicher Polarität zweier benachbarter Energiespeicherzellen (1) mittels flächig ausgebildeter Zellverbindungselemente (4), wobei eine Fläche eines Zellverbindungselements (4) im Wesentlichen einer Fläche von zwei Polanschlüssen (Ib,Ic) entspricht;- Galvanisches Verbinden eines flächig ausgebildeten zweiten Rückleiters (3) mit einem zweiten Polanschluss (Ic) einer an einem zweiten Ende des Speicherzellstapels (10) angeordneten Energiespeicherzelle (1), wobei der zweite Rückleiter (3) im Wesentlichen über die gesamte Fläche der Unterseite des Speicherzellstapels (10) ausgebildet ist; und- Galvanisches Verbinden eines ersten Rückleiters (2) mit einem ersten Polanschluss (1b) einer an einem ersten Ende des Speicherzellstapels (10) angeordneten Energiespeicherzelle (1).

Bevorzugte Ausführungsformen der Energiespeicherzelle und des Energiespeichermoduls sind Gegenstand von Unteransprüchen. Erfindungsgemäß ist vorgesehen, dass bei der Energiespeicherzelle in betriebsgemäßer Lage der Energiespeicherzelle eine Austrittseinrichtung für Gase der Energiespeicherzelle an einer Oberseite der Energiespeicherzelle angeordnet ist. Erfindungsgemäß verbleibt auf diese Weise eine Einrichtung zur Entgasung der Energiespeicherzelle an einer Oberseite der Energiespeicherzelle, wobei eine elektrische Verdrahtung ausschließlich an der Unterseite der Energiespeicherzelle erfolgt. Es wird auf diese Weise somit eine bauliche Trennung von Entgasungseinrichtung und Verdrahtung realisiert, wodurch vorteilhaft eine Verdrahtung mit minimalen induktiven Anteilen bereitgestellt werden kann.

Eine bevorzugte Ausführungsform der erfindungsgemäßen Energiespeicherzelle ist dadurch gekennzeichnet, dass die Polanschlüsse außerhalb des Zellgehäuses flächig ausgebildet sind, wobei die Polanschlüsse aus dem Zellgehäuse in Relation zu geometrischen Abmessungen des Zellgehäuses gering vorstehen. Durch die dadurch bewirkte niedrige Bauform der Polanschlüsse können die induktiven Anteile der Verdrahtung effizient verringert werden. Die erfindungsgemäße Energiespeicherzelle zeichnet sich dadurch aus, dass jeder der Polanschlüsse im Wesentlichen über eine Hälfte einer Fläche der Unterseite des Zellgehäuses ausgebildet ist. Dadurch wird eine möglichst flächige Verdrahtung realisiert, wodurch ein Bauraum für die Energiespeicherzelle optimal ausgenutzt werden kann und eine möglichst niederohmige Verbindung hergestellt werden kann.

Eine bevorzugte Ausführungsform des erfindungsgemäßen Energiespeichermoduls ist dadurch gekennzeichnet, dass der erste Rückleiter und der zweite Rückleiter mittels einer wärmeleitfähigen, ersten Isolationsschicht voneinander elektrisch isoliert sind. Aufgrund der Wärmeleitfähigkeit der Isolationsschicht wird vorteilhaft eine gute Kühlungsmöglichkeit für die Energiespeicherzelle ermöglicht.

Eine bevorzugte Ausführungsform des erfindungsgemäßen Energiespeichermoduls zeichnet sich dadurch aus, dass die erste Isolationsschicht als eine dielektrische Schicht mit hoher Dielektrizitätskonstante ausgebildet ist. Auf diese Weise wird ein kapazitiver Parallelpfad an den Anschlusspolen bereitgestellt, wodurch in einem AC-Betrieb Schaltverluste von Halbleiterschaltern für das Energiespeichermodul weiter reduzierbar sind.

Eine weitere bevorzugte Ausführungsform des erfindungsgemäßen Energiespeichermoduls zeichnet sich dadurch aus, dass an der Unterseite des Speicherzellstapels eine flächig ausgebildete Kühlungseinrichtung angeordnet ist. Dadurch ist vorteilhaft eine zusätzliche Kühlungsmöglichkeit für das Energiespeichermodul von der Unterseite her ermöglicht.

Eine weitere bevorzugte Ausführungsform des erfindungsgemäßen Energiespeichermoduls ist dadurch gekennzeichnet, dass zwischen der Kühlungseinrichtung und dem zweiten Rückleiter eine zweite Isolationsschicht angeordnet ist. Dies realisiert eine Potentialtrennung zwischen der elektrisch leitenden Kühlungseinrichtung und dem zweiten Rückleiter, was eine Betriebssicherheit für das Energiespeichermodul auf vorteilhafte Weise gewährleistet.

Eine weitere bevorzugte Ausführungsform des erfindungsgemäßen Energiespeichermoduls zeichnet sich dadurch aus, dass die Kühlungseinrichtung als der zweite Rückleiter ausgebildet ist. In diesem Fall kann eine vorteilhafte Doppelfunktion für die Kühlungseinrichtung als elektrischer Rückleiter realisiert werden. Vorteilhaft lässt sich auf diese Weise ein Rückleiter einsparen.

Eine weitere bevorzugte Ausführungsform des erfindungsgemäßen Energiespeichermoduls ist dadurch gekennzeichnet, dass mittels der Kühlungseinrichtung Platz für eine elektronische Steuerungseinrichtung bereitgestellt wird. Nachdem ein Fokus des erfindungsgemäßen Energiespeichermoduls auf einer AC-Anwendung liegt, müssen die dazu erforderlichen Halbleiterschalter auch platziert und gekühlt werden. Mit dem von der Kühlungseinrichtung bereitgestellten Platz ist dies vorteilhaft gut möglich.

Eine weitere bevorzugte Ausführungsform des erfindungsgemäßen Energiespeichermoduls zeichnet sich dadurch aus, dass die Kühlungseinrichtung wenigstens eine größere Lateralmessung als eine Flächenabmessung einer Unterseite des Speicherzellstapels aufweist. Dadurch kann vorteilhaft eine einfach zu realisierende elektrische Anschlussmöglichkeit für die beiden Rückleiter an die elektronische Steuerungseinrichtung bereitgestellt werden.

### Vorteile der Erfindung

Als besonders vorteilhaft wird bei der vorliegenden Erfindung angesehen, dass durch die flächige Ausbildung bzw. Überlappung der Zellverbindungselemente und der Rückleiter das Energiespeichermodul im Ergebnis sehr niedrig und dadurch Platz sparend und Bauraum gut ausnützend ausgebildet ist.

Ein weiterer erheblicher Vorteil einer derartigen Anordnung wird darin gesehen, dass Verlustenergie insbesondere bei der Entnahme von Wechselstrom hoher Frequenzen aus dem Energiespeichermodul erheblich reduziert sein kann. Insbesondere bei Batteriesystemen mit integriertem Umrichter, sogenannten Batteriedirektumrichtern (engl. battery direct inverter, BDI), bei denen ein schneller Wechsel der Stromführung durch ein Batteriemodul zur Variation der Spannung erfolgt, ist diese Reduzierung der Verlustenergie von großem Vorteil.

Überdies kann durch die Vermeidung von induktiven Verlustanteilen durch die Energiespeicherzellen eine elektromagnetische Verträglichkeit (EMV) verbessert werden, da emittierte elektromagnetische Felder vermindert und auf diese Weise Störeinflüsse auf benachbarte Elektronikbauteile verringert werden können. Ferner werden ohmsche Verluste, beispielsweise aufgrund des Skineffekts, bedeutsam reduziert, was vorteilhafter Weise einen erhöhten Wirkungsgrad und geringere Wärmeentwicklung des Energiespeichermoduls bewirkt.

Weitere Merkmale und Vorteile der vorliegenden Erfindung werden nachfolgend anhand von Ausführungsformen mit Bezug auf die Figuren erläutert. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung, sowie unabhängig von ihrer Formulierung bzw. Darstellung in der Beschreibung bzw. in den Figuren. Die Figuren sind vor allem dazu gedacht, die erfindungswesentlichen Prinzipien zu verdeutlichen. In den Figuren bezeichnen gleiche Bezugszeichen gleiche bzw. funktionsgleiche Elemente.

### Kurze Beschreibung der Zeichnungen

Es zeigen:
- Fig. 1: eine prinzipielle Darstellung einer einzelnen erfindungsgemäßen Energiespeicherzelle;
- Fig. 2: eine prinzipielle Darstellung einer ersten Ausführungsform eines Speicherzellstapels des erfindungsgemäßen Energiespeichermoduls;
- Fig. 3: eine prinzipielle Ansicht von unten auf den Speicherzellstapel des erfindungsgemäßen Energiespeichermoduls;
- Fig. 4: eine prinzipielle perspektivische Darstellung des Speicherzellstapels des erfindungsgemäßen Energiespeichermoduls; und
- Fig. 5: eine prinzipielle Darstellung eines Ablaufs einer Ausführungsform des erfindungsgemäßen Verfahrens.

### Ausführungsformen der Erfindung

Die im Folgenden verwendete Richtungsterminologie, das heißt, Begriffe wie "links", "rechts", "oben", "unten", "vorne", "hinten", "darüber", "dahinter", "erste", "letzte" und dergleichen, wird lediglich zum besseren Verständnis der Zeichnungen verwendet, und soll in keinem Fall eine Beschränkung der Allgemeinheit darstellen.

Elektrische Energiespeicherzellen im Sinne der vorliegenden Erfindung umfassen alle Einrichtungen, welche über einen vordefinierten Zeitraum elektrische Energie speichern und über einen weiteren Zeitraum wieder abgeben können. Energiespeicherzellen im Sinne der vorliegenden Erfindung umfassen dabei alle Arten von sekundären und primären Energiespeichern, insbesondere elektrisch kapazitive, elektrochemische (Faradaysche) sowie kombiniert arbeitende Speichertypen.

Die betrachteten Zeiträume können dabei von Sekunden bis hin zu Stunden, Tagen oder Jahren umfassen. Elektrische Energiespeicherzellen können beispielsweise Lithium-Ionen-Zellen, Lithium-Polymer-Zellen, Nickel-Metallhydrid-Zellen, Ultrakondensatoren, Superkondensatoren, Powerkondensatoren, BatCaps, Akkumulatoren auf der Basis von Blei, Zink, Natrium, Lithium, Magnesium, Schwefel oder anderen Metallen, Elementen oder Legierungen, oder ähnliche Systeme umfassen. Die Funktionalität der von der Erfindung umfassten elektrischen Energiespeicherzellen kann dabei auf Interkalationselektroden, Reaktionselektroden oder Legierungselektroden in Kombination mit wässrigen, aprotischen oder polymeren Elektrolyten beruhen.

Elektrische Energiespeichermodule im Sinne der vorliegenden Erfindung umfassen Komponenten, welche mehrere elektrische Energiespeicherzellen aufweisen, die zum Beispiel in einem Gehäuse angeordnet sind, und wobei die elektrischen Energiespeicherzellen in geeigneter Weise elektrisch untereinander gekoppelt sind, um eine serielle oder parallele Verschaltung der Energiespeicherzellen zu gewährleisten. Elektrische Energiespeichermodule können dabei Modulanschlüsse aufweisen, an welchen eine von der internen Verschaltung der elektrischen Energiespeicherzellen des elektrischen Energiespeichermoduls abhängige Ausgangsspannung abgreifbar ist.

Gehäuse im Sinne der vorliegenden Erfindung umfassen alle Bauteile, welche eine Ausnehmung zur Aufnahme mehrerer elektrischer Energiespeicherzellen sowie der elektrisch leitfähigen Verschaltungselemente der elektrischen Energiespeicherzellen aufweisen, und welche die aufgenommenen Energiespeicherzellen und Elemente mechanisch und/oder elektrisch gegenüber der Außenwelt abschirmen können. Gehäuse können dabei elektrisch leitfähige Materialien oder Kombinationen aus Teilbereichen derartiger Materialien aufweisen, wie beispielsweise Metalle und Legierungen aus Metallen. Die Form und Größe der Gehäuse kann dabei an die aufgenommenen Energiespeicherzellen und Elemente angepasst sein.

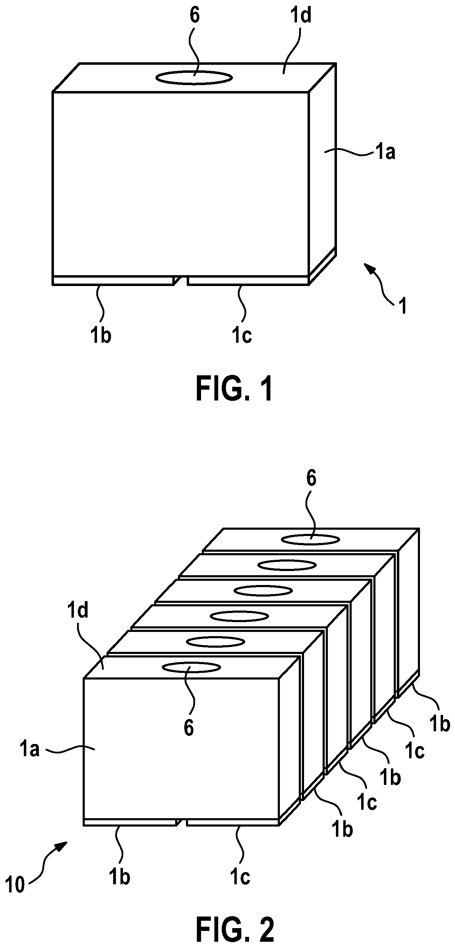

Fig. 1 zeigt in einer perspektivischen Darstellung eine Ausführungsform einer erfindungsgemäßen Energiespeicherzelle 1. Die Energiespeicherzelle 1 weist zwei Polanschlüsse 1b (z.B. Pluspol) und 1c (z.B. Minuspol) auf, die an einer Unterseite des Zellgehäuses 1a im Wesentlichen flächig ausgebildet sind, wobei mindestens einer der Polanschlüsse 1b, 1c gegen das Zellgehäuse 1a elektrisch isoliert ist. Jeder der Polanschlüsse 1b, 1c ist dabei großflächig über nahezu jeweils eine halbe Zellbodenfläche ausgebildet. Beispielsweise kann vorgesehen sein, dass das Zellgehäuse 1a auf einem Plus-Potential des ersten Polanschlusses 1b liegt. Das Zellgehäuse 1a ist vorzugsweise metallisch, typischerweise aus Aluminium und ist elektrisch sehr gut leitend. Die Polanschlüsse 1b, 1c sind innerhalb des Zellgehäuses 1a vorzugsweise in geringer Höhe mit minimalen Abstand zu Zellwickeln (nicht dargestellt) ausgeführt.

Außerdem sind die Polanschlüsse 1b, 1c derart zu einem Gehäuseboden des Zellgehäuses 1a abgedichtet, dass kein Elektrolyt austreten kann. Eine Austrittseinrichtung 6 (z.B. eine Entgasungsöffnung), die für den Fall einer Entgasung aus dem Zellinneren vorgesehen werden muss, wird wie im Stand der Technik oben in einem Gehäusedeckel 1d realisiert. Die Austrittseinrichtung 6 dient dazu, dass Gas während des Betriebs der Energiespeicherzelle 1 aus der Energiespeicherzellen 1 kontrolliert austreten und gegebenenfalls über dafür vorgesehene Sammelkanäle (z.B. Gassammler, nicht dargestellt) gesammelt und abgeleitet werden kann.

Fig. 2 zeigt eine Anordnung von beispielhaft sechs Energiespeicherzellen 1 zu einem Speicherzellstapel 10 noch ohne elektrische Verdrahtung. Im Falle, dass die Zellgehäuse 1a auf dem Potential eines der Potentialanschlüsse 1b, 1c der Energiespeicherzelle 1 liegen, ist eine Isolierung der Zellgehäuse 1a gegeneinander erforderlich. Dies kann beispielsweise in Form von dünnen Lackschichten (nicht dargestellt) ausgeführt sein.

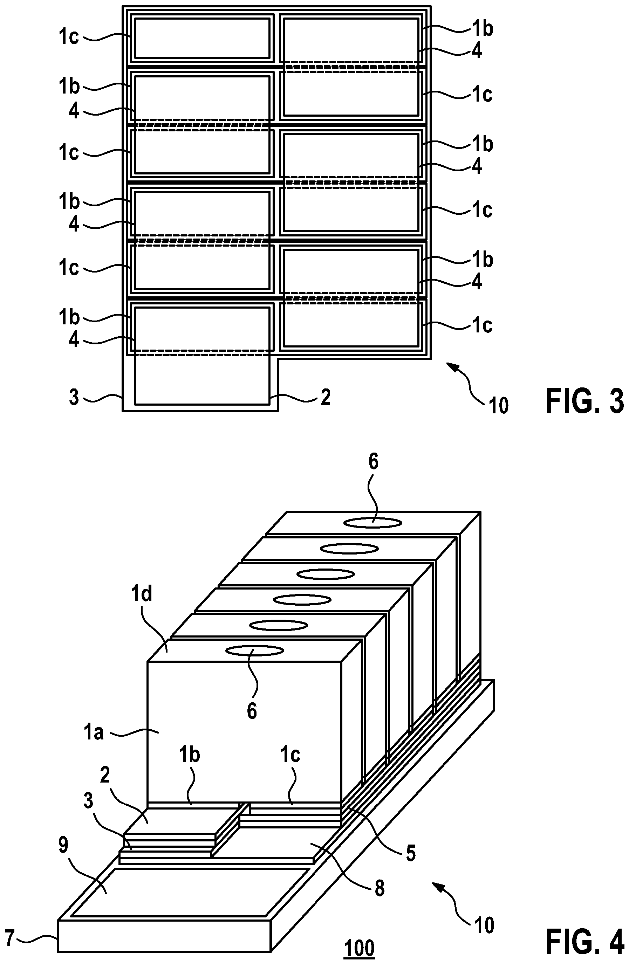

Fig. 3 zeigt eine Unteransicht der Anordnung von Fig. 2 mit flächig ausgebildeten Zellverbindungselementen 4 direkt unter den Polanschlüssen 1b, 1c. Es ist erkennbar, dass zu einer Realisierung einer elektrischen Serienschaltung aller Energiespeicherzellen 1 im Speicherzellstapel 10 jeweils zwei benachbarte Energiespeicherzellen 1 elektrisch verbunden sind. Gegebenenfalls sind auch Varianten denkbar, die auch parallel geschaltete Energiespeicherzellen 1 enthalten (nicht dargestellt).

Man erkennt aus Fig. 3, dass jeweils zwei unterschiedlich gepolte Polanschlüssen 1b, 1c mit jeweils einem flächig ausgebildeten Zellverbindungselement 4 (vorzugsweise aus Metall) galvanisch verbunden ist, wobei eine Ausdehnung des flächigen Zellverbindungselements 4 im Wesentlichen einer Gesamtfläche von zwei Flächen der Polanschlüsse 1b, 1c entspricht. Auf diese Weise ist eine besonders großflächig ausgebildete Modulverdrahtung erreichbar, welche besonders niederohmig und niederinduktiv ausgebildet ist und dadurch Schaltverluste in Halbleiterschaltern (nicht dargestellt) in einem AC-Betrieb eines mit dem Speicherzellstapel 10 ausgerüsteten Energiespeichermoduls 100 vorteilhaft stark reduziert. Die Verbindungen zwischen den Zellverbindungselementen 4 und den Polanschlüssen 1b, 1c sind vorzugsweise als Schweißverbindungen ausgebildet, um einen möglichst geringen elektrischen Widerstand über die gesamte Betriebsdauer der Energiespeicherzellen 1 zu ermöglichen.

Fig. 4 zeigt in einer perspektivischen Ansicht eine Ausführungsform des Speicherzellstapels 10 von Fig. 3. Eine elektrische Verdrahtung der Energiespeicherzellen 1 ist derart ausgebildet, dass ein zweiter Rückleiter 3 an allen Zellunterseiten flächig und nur durch eine dünne, wärmeleitfähige erste Isolationsschicht 5 von den darüber angeordneten, flächig ausgebildeten Zellverbindungselementen 4 getrennt, ausgebildet ist. Ein elektrischer Anschluss des zweiten Rückleiters 3 erfolgt vorzugsweise an einem Polanschluss 1c einer zuhinterst im Speicherzellstapel 10 angeordneten Speicherzelle 1, sodass auf diese Weise "der letzte Minuspol" des Speicherzellstapels 10 elektrisch an den zweiten Rückleiter 3 angeschlossen ist. Die dünne erste Isolationsschicht 5 erstreckt sich über die gesamte Fläche der Unterseite des Speicherzellstapels 10, mit Ausnahme einer Aussparung an dem genannten Polanschluss 1c an der zuhinterst angeordneten Energiespeicherzelle 1 zur elektrisch leitenden Anbindung des zweiten Rückleiters 3.

Die erste Isolationsschicht 5 könnte alternativ auch als eine dielektrische Schicht mit hoher Dielektrizitätskonstante realisiert sein, um einen niederinduktiven, kapazitiven Parallelpfad darzustellen zum Zwecke einer weiteren Minimierung des induktiven Einflusses auf Modulebene.

Man erkennt in Fig. 4 ferner, dass an einer Unterseite des Speicherzellstapels 10 eine Kühlungseinrichtung 7 (z.B. eine metallische Kühlplatte) zu Kühlungszwecken angeordnet ist, mit deren Hilfe es möglich ist, thermische Energie von den Energiespeicherzellen 1 des Speicherzellstapels 10 kontrolliert abzuführen. Vorzugswese ist in diesem Fall zwischen dem zweiten Rückleiter 3 und der metallisch ausgebildeten Kühlungseinrichtung 7 eine zweite Isolationsschicht 8 vorgesehen, die ebenfalls gute Wärmeleitungseigenschaften aufweist.

In einer weiteren Ausführungsform des Speicherzellstapels 10 übernimmt die metalllisch ausgebildete Kühlungseinrichtung 7 auch noch die elektrische Funktion des zweiten Rückleiters 3, wodurch vorteilhaft ein zusätzlicher Rückleiter 3 eingespart werden kann. Dieser Wegfall eines zusätzlichen Rückleiters nebst erforderlicher Isolationsschicht führt vorteilhaft zu einer weiteren Reduzierung der Bauhöhe.

Der typischerweise metallische, oberhalb der Energiespeicherzellen 1 angeordnete Gassammelkanal (nicht dargestellt) kann vorteilhaft auch zu einer mechanischen Fixierung der Energiespeicherzellen 1 auf der Kühlungseinrichtung 7 verwendet werden.

Auf bzw. innerhalb der Kühlungseinrichtung 7 kann optional eine Fläche 9 für elektronische Einrichtungen vorgesehen sein. Im Falle von BDI- oder BDC-Modulen können hier elektronische Leistungsschalter in unmittelbarer Nähe und auf gleicher Bauhöhe zu den Energiespeicherzellen 1 angeordnet werden, was vorteilhaft in kürzesten Anschlusslängen und geringsten Induktivitätswerten resultiert.

Aufgrund der sehr flächig ausgebildeten Verdrahtung ist im Ergebnis eine gesamte Bauform des Speicherzellstapels 10 sehr kompakt ausgeführt, was vorteilhaft Platz und Kostenersparnisse mit sich bringt und somit eine höhere Energiedichte des Gesamtsystems realisiert werden kann

Vorteilhaft kann dadurch ein Beitrag der Modulinduktivität gegenüber einem herkömmlichen Speicherzellstapel deutlich verringert werden. Ferner bewirkt die erfindungsgemäße Anordnung durch Verwendung des großflächig ausgebildeten zweiten Rückleiters 3 eine besonders niederohmsche Modulverdrahtung und somit eine Minimierung von ohmschen Verlusten, die in Wärme umgesetzt werden, und die sowohl bei konventionellem DC-Betrieb als auch bei AC-Betrieb auftreten, insbesondere in Form von Verlusten aus dem Skineffekt.

Daraus resultiert im Ergebnis vorteilhaft eine Minimierung der Modulinduktivität, wodurch eine reduzierte Avalanche-Belastung und Verlustenergie der Schalter des Batteriedirektumrichters und reduzierte elektromagnetische Emissionen erreicht werden können. Im Ergebnis ergibt dies einen verbesserten Wirkungsgrad des Gesamtsystems durch einen verlustarmen Gesamtaufbau.

Es ist vorteilhaft auch denkbar, die Art der Modulkontaktierung von den hier beschriebenen exemplarischen Energiespeicherzellen 1 auf Kondensatoren aller Art zu übertragen.

Die dargestellten Energiespeichermodule können beispielsweise bevorzugt in Systemen eingesetzt werden, in denen Wechselströme hoher Frequenz aus den Energiespeicherzellen entnommen werden, beispielsweise in Batteriedirektumrichtern mit Ansteuerfrequenzen oberhalb von etwa 100 Hz. In diesen Systemen kann aufgrund der Bauweise der Einfluss induktiver Impedanzbeiträge bei Wechselstrombetrieb minimiert werden. Gleichzeitig verbessert sich das Ansprechverhalten der Energiespeichermodule im Kurzzeitbereich, was die Dynamik und Zuverlässigkeit der Systeme erheblich verbessert.

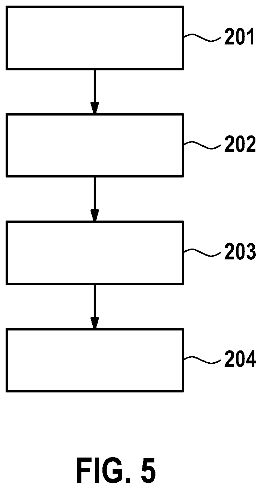

Fig. 5 zeigt eine schematische Darstellung eines Verfahrens zum Herstellen eines elektrischen Speicherzellstapels 10, insbesondere eines der in den Fig. 3 und 4 schematisch gezeigten Speicherzellstapels 10.

In einem ersten Schritt 201 erfolgt ein alternierendes Anordnen von Energiespeicherzellen 1 mit einem Zellgehäuse 1a und jeweils zwei nach unten aus den Energiespeicherzellen 1 herausgeführten Polanschlüssen 1b,1c zu einem Speicherzellstapel 10, wobei die Energiespeicherzellen 1 in betriebsgemäßer Lage um jeweils 180 Grad gegeneinander versetzt angeordnet werden.

In einem zweiten Schritt 202 wird ein Verbinden von ersten mit zweiten Polanschlüssen 1b,1c unterschiedlicher Polarität zweier benachbarter Energiespeicherzellen 1 mittels flächig ausgebildeter Zellverbindungselemente 4 durchgeführt, wobei eine Fläche eines Zellverbindungselements 4 im Wesentlichen einer Fläche von zwei Polanschlüssen 1b,1c entspricht.

In einem dritten Schritt 203 erfolgt ein galvanisches Verbinden eines flächig ausgebildeten zweiten Rückleiters 3 mit einem zweiten Polanschluss 1c einer an einem zweiten Ende des Speicherzellstapels 10 angeordneten Energiespeicherzelle 1, wobei der zweite Rückleiter 3 im Wesentlichen über die gesamte Fläche der Unterseite des Speicherzellstapels 10 ausgebildet ist.

Schließlich wird in einem vierten Schritt 204 ein Galvanisches Verbinden eines ersten Rückleiters 2 mit einem ersten Polanschluss 1b einer an einem ersten Ende des Speicherzellstapels 10 angeordneten Energiespeicherzelle 1 durchgeführt.

Zusammenfassend wird mit der Erfindung eine elektrische Energiespeicherzelle geschaffen, die vorzugsweise zur Anordnung in einem Modulverbund vorgesehen ist. Hinsichtlich eines regulären Betriebs in einer Umrichtereinrichtung ist die Anordnung im Modulverbund besonders verlustarm ausgebildet, was mittels einer elektrischen Verdrahtung inklusive einer besonders niederinduktiv und niederohmig ausgebildeten Modulzu- und ableiterverdrahtung erreichbar ist.

Obwohl die vorliegende Erfindung anhand bevorzugter Ausführungsbeispiele beschrieben wurde, ist sie darauf nicht beschränkt. Insbesondere sind die genannten Materialien und Topologien nur beispielhaft und nicht auf die erläuterten Beispiele beschränkt.

Der Fachmann wird also die beschriebenen Merkmale der Erfindung in geeigneter Weise abändern oder miteinander kombinieren können, ohne vom Kern der Erfindung wie in den Ansprüchen 1-11 definiert abzuweichen.

## Patentansprüche

1. Elektrische Energiespeicherzelle (1) aufweisend:
- ein Zellgehäuse (1a);
- eine Austrittseinrichtung (6) für Gase der Energiespeicherzelle; und
- zwei Polanschlüsse (1b,1c) mit jeweils unterschiedliche Polaritäten, wobei wenigstens einer der Polanschlüsse (1b,1c) gegenüber dem Zellgehäuse (1a) elektrisch isoliert ist, wobei in betriebsgemäßer Lage
der Energiespeichzelle (1) die Polanschlüsse (1b,1c) an einer Unterseite der Energiespeicherzelle (1) angeordnet sind und die Austrittseinrichtung (6) für Gase der Energiespeicherzelle (1) an einer Oberseite der Energiespeicherzelle (1) angeordnet ist, **dadurch gekennzeichnet, dass**
jeder der Polanschlüsse (1b,1c) im Wesentlichen über eine Hälfte einer Fläche der Unterseite des Zellgehäuses (1a) ausgebildet ist.

2. Elektrische Energiespeicherzeile nach Anspruch 1, **dadurch gekennzeichnet, dass** die Polanschlüsse (1b,1c) außerhalb des Zellgehäuses (1a) flächig ausgebildet sind, wobei die Polanschlüsse (1b,1c) aus dem Zellgehäuse (1a) in Relation zu geometrischen Abmessungen des Zellgehäuses (1a) gering vorstehen.

3. Elektrisches Energiespeichermodul (100), aufweisend:
- wenigstens einen Speicherzellstapel (10), mit mehreren Energiespeicherzellen (1) nach einem der Ansprüche 1 oder 2, die in betriebsgemäßer Lage der Energiespeichzellen (1) Polanschlüsse (1b,1c) an Unterseiten der Energiespeicherzelle (1) aufweisen, wobei die Energiespeicherzellen (1) in dem Speicherzellstapel (10) seriell derart angeordnet sind, dass jeweils ein erster Polanschluss (1b) und ein zweiter Polanschluss (1c) zweier benachbarter Energiespeicherzellen (1) miteinander galvanisch mittels flächig ausgebildeter Zellverbindungselemente (4) verbunden sind, wobei eine Fläche eines Zellverbindungselements (4) im Wesentlichen einer Fläche von zwei Polanschlüssen (1b,1c) entspricht, wobei ein zweiter Rückleiter (3) mit einem zweiten Polanschluss (1c) einer an einem zweiten Ende des Speicherzellstapels (10) angeordneten Energiespeicherzelle (1) galvanisch verbunden und im Wesentlichen über die gesamte Fläche der Unterseite des Speicherzellstapels (10) ausgebildet ist, wobei ein erster Rückleiter (2) mit einem ersten Polanschluss (1b) einer an einem ersten Ende des Speicherzellstapels (10) angeordneten Energiespeicherzelle (1) galvanisch verbunden ist.

4. Energiespeichermodul nach Anspruch 3, **dadurch gekennzeichnet, dass** der erste Rückleiter (2) und der zweite Rückleiter (3) mittels einer wärmeleitfähigen, ersten Isolationsschicht (5) voneinander elektrisch isoliert sind.

5. Energiespeichermodul nach Anspruch 4, **dadurch gekennzeichnet, dass** die erste Isolationsschicht () als eine dielektrische Schicht mit hoher Dielektrizitätskonstante ausgebildet ist.

6. Energiespeichermodul nach einem der Ansprüche 3 bis 5, **dadurch gekennzeichnet, dass** an der Unterseite des Speicherzellstapels (10) eine flächig ausgebildete Kühlungseinrichtung (7) angeordnet ist.

7. Energiespeichermodul nach Anspruch 6, **dadurch gekennzeichnet, dass** zwischen der Kühlungseinrichtung (7) und dem zweiten Rückleiter (3) eine zweite Isolationsschicht (8) angeordnet ist.

8. Energiespeichermodul nach Anspruch 7, **dadurch gekennzeichnet, dass** die Kühlungseinrichtung (7) als der zweite Rückleiter (3) ausgebildet ist.

9. Energiespeichermodul nach einem der Ansprüche 3 bis 8, **dadurch gekennzeichnet, dass** mittels der Kühlungseinrichtung (7) Platz für eine elektronische Steuerungseinrichtung bereitgestellt wird.

10. Energiespeichermodul nach Anspruch 9, **dadurch gekennzeichnet, dass** die Kühlungseinrichtung (7) wenigstens eine größere Lateralabmessung als eine Flächenabmessung einer Unterseite des Speicherzellstapels (10) aufweist.

11. Verfahren zum Herstellen eines elektrischen Energiespeichermoduls (100), mit den Schritten:
- Alternierendes Anordnen von Energiespeicherzellen (1) nach einem der Ansprüche 1 oder 2 mit einem Zellgehäuse (1a) und jeweils zwei nach unten aus den Energiespeicherzellen (1) herausgeführten Polanschlüssen (1b,1c) zu einem Speicherzellstapel (10), wobei die Energiespeicherzellen (1) in betriebsgemäßer Lage um jeweils 180 Grad gegeneinander versetzt angeordnet werden;
- Verbinden von ersten mit zweiten Polanschlüssen (1b,1c) unterschiedlicher Polarität zweier benachbarter Energiespeicherzellen (1) mittels flächig ausgebildeter Zellverbindungselemente (4), wobei eine Fläche eines Zellverbindungselements (4) im Wesentlichen einer Fläche von zwei Polanschlüssen (1b,1c) entspricht;
- Galvanisches Verbinden eines flächig ausgebildeten zweiten Rückleiters (3) mit einem zweiten Polanschluss (1c) einer an einem zweiten Ende des Speicherzellstapels (10) angeordneten Energiespeicherzelle (1), wobei der zweite Rückleiter (3) im Wesentlichen über die gesamte Fläche der Unterseite des Speicherzellstapels (10) ausgebildet ist; und
- Galvanisches Verbinden eines ersten Rückleiters (2) mit einem ersten Polanschluss (1b) einer an einem ersten Ende des Speicherzellstapels (10) angeordneten Energiespeicherzelle (1).

## Claims

1. Electrical energy storage cell (1), having:
- a cell housing (1a);
- an outlet device (6) for gases of the energy storage cell; and
- two pole connections (1b, 1c), each with different polarities, wherein at least one of the pole connections (1b, 1c) is electrically insulated from the cell housing (1a), wherein, in the operational position of the energy storage cell (1), the pole connections (1b, 1c) are arranged on a bottom side of the energy storage cell (1) and the outlet device (6) for gases of the energy storage cell (1) is arranged on a top side of the energy storage cell (1), **characterized in that** each of the pole connections (1b, 1c) is formed substantially over half of a surface area of the bottom side of the cell housing (1a).

2. Electrical energy storage cell according to Claim 1, **characterized in that** the pole connections (1b, 1c) are formed in a flat manner outside the cell housing (1a), wherein the pole connections (1b, 1c) project out of the cell housing (1a) to a slight extent in relation to geometric dimensions of the cell housing (1a).

3. Electrical energy storage module (100), having:
- at least one storage cell stack (10), comprising a plurality of energy storage cells (1) according to either of Claims 1 and 2 which, in the operational position of the energy storage cells (1), have pole connections (1b, 1c) on bottom sides of the energy storage cell (1), wherein the energy storage cells (1) are arranged in series in the storage cell stack (10) in such a way that in each case a first pole connection (1b) and a second pole connection (1c) of two adjacent energy storage cells (1) are electrically connected to one another by means of cell connecting elements (4) of flat design, wherein a surface of a cell connecting element (4) corresponds substantially to a surface of two pole connections (1b, 1c), wherein a second return conductor (3) is electrically connected to a second pole connection (1c) of an energy storage cell (1) which is arranged at a second end of the storage cell stack (10) and is formed substantially over the entire surface area of the bottom side of the storage cell stack (10), wherein a first return conductor (2) is electrically connected to a first pole connection (1b) of an energy storage cell (1) which is arranged at a first end of the storage cell stack (10).

4. Energy storage module according to Claim 3, **characterized in that** the first return conductor (2) and the second return conductor (3) are electrically insulated from one another by means of a thermally conductive, first insulation layer (5).

5. Energy storage module according to Claim 4, **characterized in that** the first insulation layer () is formed as a dielectric layer with a high dielectric constant.

6. Energy storage module according to one of Claims 3 to 5, **characterized in that** a cooling device (7) of flat design is arranged on the bottom side of the storage cell stack (10).

7. Energy storage module according to Claim 6, **characterized in that** a second insulation layer (8) is arranged between the cooling device (7) and the second return conductor (3).

8. Energy storage module according to Claim 7, **characterized in that** the cooling device (7) is formed as the second return conductor (3).

9. Energy storage module according to one of Claims 3 to 8, **characterized in that** space for an electronic control device is provided by means of the cooling device (7).

10. Energy storage module according to Claim 9, **characterized in that** the cooling device (7) has at least one relatively large lateral dimension as a surface area dimension of a bottom side of the storage cell stack (10).

11. Method for producing an electrical energy storage module (100), comprising the steps of:
- alternately arranging energy storage cells (1) according to either of Claims 1 and 2 having a cell housing (1a) and in each case two pole connections (1b, 1c), which are routed downwards out of the energy storage cells (1), to form a storage cell stack (10), wherein the energy storage cells (1) are arranged in a manner offset through in each case 180° in relation to one another in the operational position;
- connecting first pole connections (1b) to second pole connections (1c) of different polarities of two adjacent energy storage cells (1) by means of cell connecting elements (4) which are of flat design, wherein a surface of a cell connecting element (4) corresponds substantially to a surface of two pole connections (1b, 1c);
- electrically connecting a second return conductor (3) of flat design to a second pole connection (1c) of an energy storage cell (1) which is arranged at a second end of the storage cell stack (10), wherein the second return conductor (3) is formed substantially over the entire surface area of the bottom side of the storage cell stack (10); and
- electrically connecting a first return conductor (2) to a first pole connection (1b) of an energy storage cell (1) which is arranged at a first end of the storage cell stack (10).

## Revendications

1. Cellule de stockage d'énergie électrique (1) comprenant :
- un boîtier de cellule (1a) ;
- un dispositif de sortie (6) destiné aux gaz de la cellule de stockage d'énergie ; et
- deux bornes polaires (1b, 1c) ayant chacune des polarités différentes, dans lequel au moins l'une des bornes polaires (1b, 1c) est isolée électriquement du boîtier de cellule (1a), dans lequel, dans à la position de fonctionnement de la cellule de stockage d'énergie (1), les bornes polaires (1b, 1c) sont disposées sur une face inférieure de la cellule de stockage d'énergie (1) et le dispositif de sortie (6) destiné aux gaz de la cellule de stockage d'énergie (1) est disposé sur une face supérieure de la cellule de stockage d'énergie (1), **caractérisé en ce que** chacune des bornes polaires (1b, 1c) est réalisée sensiblement sur la moitié d'une surface de la face inférieure du boîtier de cellule (1a).

2. Cellule de stockage d'énergie électrique selon la revendication 1, **caractérisée en ce que** les bornes polaires (1b, 1c) sont planes à l'extérieur du boîtier de cellule (1a), dans lequel les bornes polaires (1b, 1c) dépassent légèrement du boîtier de cellule (1a) par rapport aux dimensions géométriques du boîtier de cellule (1a).

3. Module de stockage d'énergie électrique (100), comprenant :
- au moins un empilement de cellules de stockage (10), comprenant une pluralité de cellules de stockage d'énergie (1) selon l'une des revendications 1 ou 2, qui comportent des bornes polaires (1b, 1c) sur des faces inférieures de la cellule de stockage d'énergie (1) dans la position de fonctionnement des cellules de stockage d'énergie (1), dans lequel les cellules de stockage d'énergie (1) de l'empilement de cellules de stockage (10) sont disposées en série de telle sorte qu'une première borne polaire (1b) et qu'une seconde borne polaire (1c) de deux cellules de stockage d'énergie adjacentes (1) sont reliées l'une à l'autre de manière galvanique au moyen d'éléments de connexion de cellules réalisés de manière plane (4), dans lequel une surface d'un élément de connexion de cellules (4) correspond sensiblement à une surface de deux bornes polaires (1b, 1c), dans lequel un second conducteur de retour (3) est relié de manière galvanique à une seconde borne polaire (1c) d'une cellule de stockage d'énergie (1) disposée à une seconde extrémité de la pile de cellules de stockage (10) et est réalisé sensiblement sur toute la surface de la face inférieure de l'empilement de cellules de stockage (10), dans lequel un premier conducteur de retour (2) est relié de manière galvanique à une première borne polaire (1b) d'une cellule de stockage d'énergie (1) disposée à une première extrémité de l'empilement de cellules de stockage (10).

4. Module de stockage d'énergie selon la revendication 3, **caractérisé en ce que** le premier conducteur de retour (2) et le second conducteur de retour (3) sont isolés électriquement l'un de l'autre au moyen d'une première couche d'isolation (5) thermiquement conductrice.

5. Module de stockage d'énergie selon la revendication 4, **caractérisé en ce que** la première couche d'isolation () est réalisée sous la forme d'une couche diélectrique à constante diélectrique élevée.

6. Module de stockage d'énergie selon l'une des revendications 3 à 5, **caractérisé en ce qu'**un dispositif de refroidissement (7) de structure plane est disposé sur la face inférieure de l'empilement de cellules de stockage (10).

7. Module de stockage d'énergie selon la revendication 6, **caractérisé en ce qu'**une seconde couche isolante (8) est disposée entre le dispositif de refroidissement (7) et le second conducteur de retour (3) .

8. Module de stockage d'énergie selon la revendication 7, **caractérisé en ce que** le dispositif de refroidissement (7) est conçu en tant que second conducteur de retour (3).

9. Module de stockage d'énergie selon l'une des revendications 3 à 8, **caractérisé en ce qu'**un espace est prévu pour un dispositif de commande électronique au moyen du dispositif de refroidissement (7).

10. Module de stockage d'énergie selon la revendication 9, **caractérisé en ce que** le dispositif de refroidissement (7) présente au moins une dimension latérale supérieure à une superficie d'une face inférieure de l'empilement de cellules de stockage (10).

11. Procédé de fabrication d'un module de stockage d'énergie électrique (100), comprenant les étapes consistant à :
- disposer de manière alternée des cellules de stockage d'énergie (1) selon l'une des revendications 1 ou 2 avec un boîtier de cellule (1a) et deux bornes polaires (1b, 1c) s'étendant chacune vers le bas à partir des cellules de stockage d'énergie (1) pour former un empilement de cellules de stockage (10), dans lequel les cellules de stockage d'énergie (1), dans une position de fonctionnement, sont disposées de manière décalée de 180 degrés l'une par rapport à l'autre ;
- relier des première et deuxième bornes polaires (1b, 1c) de polarités différentes de deux cellules de stockage d'énergie (1) adjacentes au moyen d'éléments de connexion de cellules (4) réalisés de manière plane, dans lequel une surface d'un élément de connexion de cellules (4) correspond sensiblement à une surface de deux bornes polaires (1b, 1c) ;
- relier de manière galvanique un second conducteur de retour (3) réalisé de manière plane à une seconde borne polaire (1e) d'une cellule de stockage d'énergie (1) disposée à une seconde extrémité de l'empilement de cellules de stockage (10), dans lequel le second conducteur de retour (3) est réalisé sensiblement sur toute la superficie de la face inférieure de l'empilement de cellules de stockage (10) ; et
- relier de manière galvanique un premier conducteur de retour (2) à une première borne polaire (1b) d'une cellule de stockage d'énergie (1) disposée à une première extrémité de l'empilement de cellules de stockage (10).
